# EUROPEAN PATENT SPECIFICATION

(11) **EP 3 059 396 B1**
(45) Date of publication and mention of the grant of the patent: **31.03.2021**
(21) Application number: 16156375.4
(22) Date of filing: 18.02.2016
(51) Int. Cl.: F01D 9/02, F01D 9/04

(54) **GAS TURBINE ENGINE AND TURBINE CONFIGURATIONS**
GASTURBINENMOTOR UND TURBINENKONFIGURATIONEN
MOTEUR À TURBINE À GAZ ET CONFIGURATIONS DE TURBINE

(30) Priority: 19.02.2015 US 201514626371
(43) Date of publication of application: 24.08.2016
(73) Proprietor: Raytheon Technologies Corporation, Farmington, CT 06032 (US)
(72) Inventor: CHAKKA, Pitchaiah Vijay, Avon, CT Connecticut 06001 (US); EASTWOOD, Jonathan Jeffery, Vernon, CT Connecticut 06066 (US)
(74) Representative: Dehns

(56) References cited:
- EP-A1- 0 615 055
- EP-A2- 1 607 580
- EP-A2- 2 642 078
- US-A1- 2009 169 369

## Description

### FIELD

The present disclosure relates to gas turbine engines and, in particular, to turbine assemblies and turbine interface configurations for gas turbine engines.

### BACKGROUND

Gas turbine engines are required to operate efficiently during operation and flight. These engines create a tremendous amount of force and generate high levels of heat. As such, components of these engines are subjected to high levels of stress, temperature and pressure. It is necessary to provide components that can withstand the demands of a gas turbine engine. It is also desirable to provide components with increased operating longevity.

Some components of a gas turbine engine experience growth due to the high temperature environment of the engine. By way of example, hot section components of an engine may undergo transformations is size during operation. Uneven temperature distributions across engine parts can reduce the fatigue resistance, operation performance and/or operational life of a component. Accordingly, there is a desire to provide configurations that reduce temperature disparities and overcomes one or more of the aforementioned drawbacks. There is also a desire to improve the configuration of gas turbine engines and vane assemblies.

US 2009/169369 discloses a turbine vane assembly as in the precharacterising portion of claim 1.

EP0615055 A1, EP2642078 A2 and EP1607580 A2 disclose other examples of turbine vane assemblies.

### BRIEF SUMMARY OF THE EMBODIMENTS

Disclosed and claimed herein are gas turbine engines and high pressure turbine vane assemblies for gas turbine engines. Viewed from a first aspect, the invention provides a high pressure turbine vane assembly for a gas turbine engine, the vane assembly comprising: a plurality of turbine vanes; an inner diameter platform coupled to the base portion of each of the plurality of turbine vanes, wherein the leading edge of the inner diameter platform is associated with a first axis; and an outer diameter platform coupled to the top portion of each of the plurality of turbine vanes, wherein the leading edge of the outer diameter platform is associated with a second axis, the second axis offset from the first axis such that the outer platform extends away from the leading edge of the turbine vanes a distance greater than an amount the inner platform extends away from the leading edge of the turbine vanes, characterised in that the platform length of the outer diameter platform in the axial direction is greater than 18% of vane pitch.

In one embodiment, the plurality of turbine vanes radially extend between the inner diameter platform and outer diameter platform.

In one embodiment, the outer diameter platform is a circumferentially extending annular structure wherein leading edges of the inner and outer platforms define, at least in part, an interface between the vane assembly and a combustor.

In one embodiment, the outer diameter platform extends 13 mm (0.5 inches) longer than the inner diameter platform.

In one embodiment, the outer diameter platform extends longer than the inner diameter platform with a range of 2.5 mm (0.1 inches) longer to 25 mm (1 inch) longer.

Another embodiment is directed to a gas turbine engine having combustor and turbine interface configuration. The gas turbine engine includes a combustor extending along a portion of a gas turbine engine and a turbine vane assembly of any of the foregoing embodiments configured to interface with the combustor. The inner diameter platform and outer diameter platform interface with the combustor. The inner diameter platform and outer diameter platform each extend from the leading edge such that each platform length in the axial direction is at least 18% of vane pitch.

In one embodiment, the inner diameter platform and outer diameter platform are located immediately downstream of the combustor.

In one embodiment, an interface between the vane assembly and the combustor includes a gas-path passage between a cavity of the combustor and leading edge of the vanes.

### BRIEF DESCRIPTION OF THE DRAWINGS

The features, objects, and advantages of the present disclosure will become more apparent from the detailed description set forth below when taken in conjunction with the drawings in which like reference characters identify correspondingly throughout and wherein:
FIG. 1 depicts a cross-sectional representation of a gas turbine engine according to one or more embodiments;
FIG. 2 depicts a graphical representation of an embodiment of a vane assembly interfacing with a combustor of a gas turbine engine;
FIGs. 3A-3B depict a vane assembly according to one or more embodiments.

### DETAILED DESCRIPTION OF THE EXEMPLARY EMBODIMENTS

### Overview and Terminology

This disclosure relates to configurations for a gas turbine and in particular combustor and vane interface. A vane assembly and a configuration for a vane assembly are provided. The vane assembly is configured to allow for an even temperature distribution based on one or more features of the assembly including but not limited to the outer diameter platform of the vane assembly. The vane assembly includes an outer diameter platform that extends beyond the inner diameter platform of the vane assembly, in a forward direction towards a combustor. As will be discussed herein, the configuration of an outer diameter platform can affect the temperature distribution across the vane assembly to allow for an even temperature distribution. By providing an even temperature distribution, component life and/or operational efficiency may be increased.

### Exemplary Embodiments

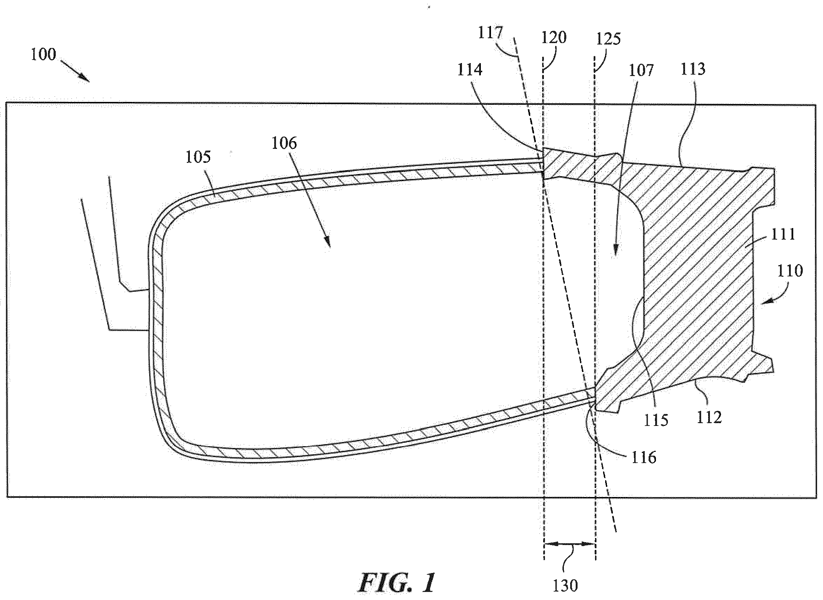

Referring now to the figures, FIG. 1 depicts a cross-sectional representation of a gas turbine engine according to one or more embodiments. Gas turbine engine 100 includes combustor **105** and vane assembly **110.** Combustor **105** extends along a portion of a gas turbine engine **100** and provides a gas-flow path from combustor cavity **106** to vane assembly **110.** Vane assembly **110** may be a high pressure turbine vane assembly down stream from combustor **105.** Vane assembly **110** interfaces with combustor **105** such that the interface between the vane assembly **110** and combustor **105** includes a gas-path passage between a cavity **106** of the combustor and leading edge of vanes of vane assembly **110.**

According to the claimed invention, vane assembly **110** includes a plurality of turbine vanes, such as vane **111.** The leading edge of vane **111** is shown as **115.** Vane assembly **110** includes inner diameter platform **112** coupled to the base portion of each vane of vane assembly **110.** The leading edge **116** of inner diameter platform **112** is associated with a first axis **125.** Outer diameter platform **113** coupled to the top portion of each vane, wherein the leading edge **114** of the outer diameter platform **113** is associated with a second axis **120.** Outer diameter platform **113** is a circumferentially extending annular structure wherein leading edges of the inner and outer platforms **113, 112** are configured to define, at least in part, an interface **117** between the vane assembly **110** and combustor **105.** Second axis **120** is offset from first axis **125** such that the outer platform **113** extends away from the leading edge **115** of turbine vane **111,** and the other vanes of vane assembly **110,** a distance **130** greater than an amount the inner platform **112** extends away from the leading edge **115** of turbine **111.** First axis **125** and second axis **120** are reference lines that may be tangential or perpendicular to the axis of rotation of the turbine **111.**

Inner diameter platform **112** and outer diameter platform **113** are configured to interface with combustor **105.** Interface **117** relates to the intersection of cavity region **107** and vane assembly **110.** Outer diameter platform **113** is configured to evenly distribute temperature across the outer diameter platform associated with the interface **117.** According to one embodiment, outer diameter platform **113** extends 13 mm (0.5 inches) longer (i.e., longer in an axial direction towards the front of the engine which translates towards the left side of the image in FIG. 1) than the inner diameter platform **112.** Outer diameter platform **113** extends longer than the inner diameter platform **112** within a range 2.5 mm to 25 mm longer (0.1 inches longer to 1 inch longer). According to the invention distance 130 is provided for length of the outer diameter platform **113** in the axial direction that is greater than 18% of vane **111** pitch. The vane pitch relates to a ratio of circumference to the number airfoils. For outer diameter platform **113,** vane pitch is calculated using the outer diameter of the vane platform at the vane leading edge with respect to a radius of the platform. For inner diameter platform 112, vane pitch is calculated using the inner diameter of the vane platform at the vane leading edge with respect to a radius of the platform.

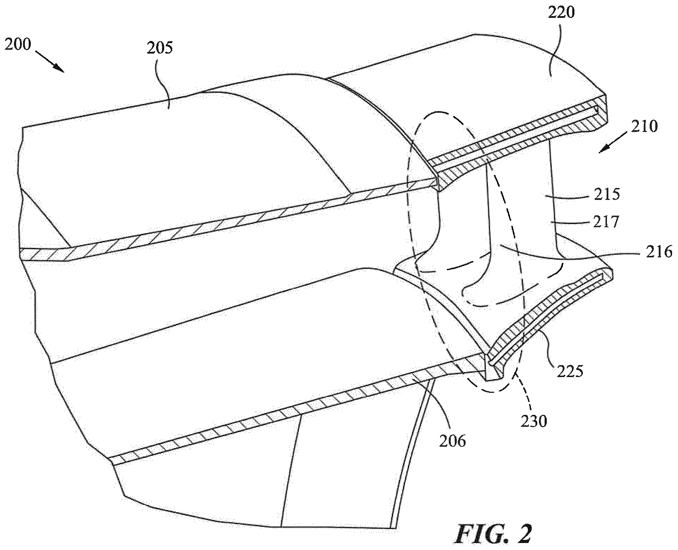

FIG. 2 depicts a graphical representation of an embodiment of a vane assembly interfacing with a combustor of a gas turbine engine. Combustor 200 is shown as an annular combustor having outer diameter portion 205 and inner diameter portion 206. Combustor 200 interfaces with vane assembly 210 include a plurality of vanes, such as vane 215. According to one embodiment, vane assembly 210 is the first stage of a high pressure turbine. Vane 215 includes leading edge 216 and trailing edge 217. Vane 215 is fit between outer diameter platform 220 and inner diameter platform 225.

An interface between combustor 200 interfaces with vane assembly 210 is shown as 230. According to one embodiment, interface 230 is configured to allow for outer diameter platform 220 to extend further than inner diameter platform 225 towards combustor 200. As such, the temperature distribution in the interface may be evenly distributed.

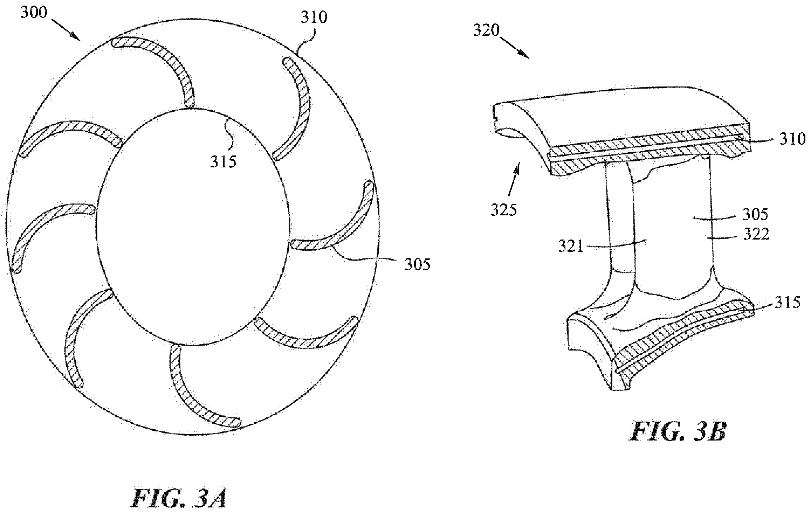

FIGs. 3A-3B depict a vane assembly according to one or more embodiments. FIG. 3A depicts a view of vane assembly 300 according to one or more embodiments. Vane assembly 300 includes one or more vanes, such as vane 305, an inner diameter platform 315 and outer diameter platform 310. Vane assembly 300 may be a high pressure turbine vane assembly. According to another embodiment, a plurality of turbine vanes of vane assembly 300 are configured for a high lift/low foil count turbine vane assembly. As used herein, a high lift/low foil count turbine vane assembly can relate to a vane assembly of a high pressure turbine assembly aft of the combustor. The plurality of turbine vanes radially extend between the inner diameter platform 315 and outer diameter platform 310.

FIG. 3B depicts a partial representation, shown as 320, of vane assembly 300 for two vanes of the assembly. Vane 305 is shown including leading edge 321 and trailing edge 322. According to one embodiment, diameter platform 310 extends beyond the leading edge of vane 305 as shown by 325. Region 325 relates to a combustor vane assembly interface region.

## Claims

1. A high pressure turbine vane assembly (110) for a gas turbine engine (100), the vane assembly comprising:
a plurality of turbine vanes (111);
an inner diameter platform (112) coupled to the base portion of each of the plurality of turbine vanes, wherein the leading edge (116) of the inner diameter platform is associated with a first axis (125); and
an outer diameter platform (113) coupled to the top portion of each of the plurality of turbine vanes, wherein the leading edge (114) of the outer diameter platform is associated with a second axis (120), the second axis offset from the first axis such that the outer platform extends away from the leading edge (115) of the turbine vanes a distance (130) greater than an amount the inner platform extends away from the leading edge of the turbine vanes, **characterised in that** a platform length of the outer diameter platform (113) in the axial direction is greater than 18% of vane pitch.

2. The high pressure turbine vane assembly (110) of claim 1, wherein the plurality of turbine vanes (111) radially extend between the inner diameter platform (112) and outer diameter platform (113).

3. The high pressure turbine vane assembly (110) of any preceding claim, wherein the outer diameter platform (113) is a circumferentially extending annular structure wherein leading edges (116, 114) of the inner and outer platforms define, at least in part, an interface (117) between the vane assembly and a combustor (105).

4. The high pressure turbine vane assembly (110) of any preceding claim, wherein the outer diameter platform (113) extends 13 mm (0.5 inches) longer than the inner diameter platform (112).

5. The high pressure turbine vane assembly (110) of any preceding claim, wherein the outer diameter platform (113) extends longer than the inner diameter platform (112) with a range of 2.5 mm to 25 mm (0.1 inches to 1 inch).

6. A gas turbine engine (100) having combustor (105) and turbine interface configuration, the gas turbine engine comprising:
a combustor extending along a portion of the gas turbine engine; and
a turbine vane assembly (110) of any preceding claim configured to interface with the combustor,
wherein the inner diameter platform (112) and outer diameter platform (113) interface with the combustor,
and wherein the inner diameter platform (112) and outer diameter platform (113) each extend from the leading edge such that each platform length is at least 18% of vane pitch.

7. The gas turbine engine of claim 6, wherein the inner diameter platform (112) and outer diameter platform (113) are located immediately downstream of the combustor (105).

8. The gas turbine engine of claims 6 or 7, wherein an interface (117) between the vane assembly (110) and the combustor (105) includes a gas-path passage between a cavity (106) of the combustor and leading edge (115) of the vanes (111).

## Patentansprüche

1. Hochdruckturbinen-Schaufelbaugruppe (110) für ein Gasturbinentriebwerk (100), wobei die Schaufelbaugruppe Folgendes umfasst:
eine Vielzahl von Turbinenschaufeln (111);
eine Innendurchmesserplattform (112), die an einen Basisabschnitt jeder der Vielzahl von Turbinenschaufeln gekoppelt ist, wobei die Anströmkante (116) der Innendurchmesserplattform einer ersten Achse (125) zugeordnet ist; und
eine Außendurchmesserplattform (113), die an einen oberen Abschnitt jeder der Vielzahl von Turbinenschaufeln gekoppelt ist, wobei die Anströmkante (114) der Außendurchmesserplattform einer zweiten Achse (120) zugeordnet ist, wobei die zweite Achse derart von der ersten Achse versetzt ist, dass sich die Außenplattform um einen Abstand (130) von der Anströmkante (115) der Turbinenschaufeln weg erstreckt, der größer als ein Betrag ist, mit welchem sich die Innenplattform von der Anströmkante der Turbinenschaufeln weg erstreckt, **dadurch gekennzeichnet, dass** eine Plattformlänge der Außendurchmesserplattform (113) in der axialen Richtung größer als 18 % der Schaufelneigung ist.

2. Hochdruckturbinen-Schaufelbaugruppe (110) nach Anspruch 1, wobei sich die Vielzahl von Turbinenschaufeln (111) radial zwischen der Innendurchmesserplattform (112) und der Außendurchmesserplattform (113) erstreckt.

3. Hochdruckturbinen-Schaufelbaugruppe (110) nach einem der vorstehenden Ansprüche, wobei die Außendurchmesserplattform (113) eine sich umlaufend erstreckende ringförmige Struktur ist und wobei die Anströmkanten (116, 114) der Innen- und Außenplattform zumindest zum Teil eine Schnittstelle (117) zwischen der Schaufelbaugruppe und einer Brennkammer (105) definieren.

4. Hochdruckturbinen-Schaufelbaugruppe (110) nach einem der vorstehenden Ansprüche, wobei sich die Außendurchmesserplattform (113) um 13 mm (0,5 Inch) länger als die Innendurchmesserplattform (112) erstreckt.

5. Hochdruckturbinen-Schaufelbaugruppe (110) nach einem der vorstehenden Ansprüche, wobei sich die Außendurchmesserplattform (113) in einem Bereich von 2,5 mm bis 25 mm (0,1 Inch bis 1 Inch) länger von der Innendurchmesserplattform (112) erstreckt.

6. Gasturbinentriebwerk (100) mit einer Brennkammer (105) und einer Turbinenschnittstellenkonfiguration, wobei das Gasturbinentriebwerk Folgendes umfasst:
eine Brennkammer entlang eines Abschnitts des Gasturbinentriebwerks; und
eine Turbinenschaufelbaugruppe (110) nach einem der vorstehenden Ansprüche, die dazu konfiguriert ist, eine Schnittstelle mit der Brennkammer zu bilden,
wobei die Innendurchmesserplattform (112) und die Außendurchmesserplattform (113) eine Schnittstelle mit der Brennkammer bilden,
und wobei die Innendurchmesserplattform (112) und die Außendurchmesserplattform (113) sich jeweils derart von der Anströmkante erstrecken, dass jede Plattformlänge mindestens 18 % der Schaufelneigung beträgt.

7. Gasturbinentriebwerk nach Anspruch 6, wobei sich die Innendurchmesserplattform (112) und die Außendurchmesserplattform (113) jeweils unmittelbar stromabwärts der Brennkammer (105) befinden.

8. Gasturbinentriebwerk nach Anspruch 6 oder 7, wobei eine Schnittstelle (117) zwischen der Schaufelbaugruppe (110) und der Brennkammer (105) einen Gaspfadkanal zwischen einem Hohlraum (106) der Brennkammer und der Anströmkante (115) der Schaufeln (111) beinhaltet.

## Revendications

1. Ensemble d'aubes de turbine haute pression (110) pour un moteur à turbine à gaz (100), l'ensemble d'aubes comprenant :
une pluralité d'aubes de turbine (111) ;
une plate-forme de diamètre intérieur (112) couplée à la partie de base de chacune de la pluralité d'aubes de turbine, dans lequel le bord d'attaque (116) de la plate-forme de diamètre intérieur est associé à un premier axe (125) ; et
une plate-forme de diamètre extérieur (113) couplée à la partie supérieure de chacune de la pluralité d'aubes de turbine, dans lequel le bord d'attaque (114) de la plate-forme de diamètre extérieur est associé à un second axe (120), le second axe étant décalé du premier axe de sorte que la plate-forme extérieure s'étend à distance du bord d'attaque (115) des aubes de turbine sur une distance (130) supérieure à une valeur sur laquelle la plate-forme intérieure s'étend à distance du bord d'attaque des aubes de turbine, **caractérisé en ce qu'**une longueur de plate-forme de la plate-forme de diamètre extérieur (113) dans la direction axiale est supérieure à 18 % du pas des aubes.

2. Ensemble d'aubes de turbine haute pression (110) selon la revendication 1, dans lequel la pluralité d'aubes de turbine (111) s'étendent radialement entre la plate-forme de diamètre intérieur (112) et la plate-forme de diamètre extérieur (113).

3. Ensemble d'aubes de turbine haute pression (110) selon une quelconque revendication précédente, dans lequel la plate-forme de diamètre extérieur (113) est une structure annulaire s'étendant circonférentiellement, dans lequel des bords d'attaque (116, 114) des plates-formes intérieure et extérieure définissent, au moins en partie, une interface (117) entre l'ensemble d'aubes et une chambre de combustion (105).

4. Ensemble d'aubes de turbine haute pression (110) selon une quelconque revendication précédente, dans lequel la plate-forme de diamètre extérieur (113) s'étend 13 mm (0,5 pouce) plus loin que la plate-forme de diamètre intérieur (112).

5. Ensemble d'aubes de turbine haute pression (110) selon une quelconque revendication précédente, dans lequel la plate-forme de diamètre extérieur (113) s'étend plus loin que la plate-forme de diamètre intérieur (112) avec une plage de 2,5 mm à 25 mm (0,1 pouce à 1 pouce).

6. Moteur à turbine à gaz (100) ayant une configuration de chambre de combustion (105) et d'interface de turbine, le moteur à turbine à gaz comprenant :
une chambre de combustion s'étendant le long d'une partie du moteur à turbine à gaz ; et
un ensemble d'aubes de turbine (110) selon une quelconque revendication précédente configuré pour assurer l'interface avec la chambre de combustion,
dans lequel la plate-forme de diamètre intérieur (112) et la plate-forme de diamètre extérieur (113) assurent l'interface avec la chambre de combustion,
et dans lequel la plate-forme de diamètre intérieur (112) et la plate-forme de diamètre extérieur (113) s'étendent chacune à partir du bord d'attaque de sorte que chaque longueur de plate-forme représente au moins 18 % du pas des aubes.

7. Moteur à turbine à gaz selon la revendication 6, dans lequel la plate-forme de diamètre intérieur (112) et la plate-forme de diamètre extérieur (113) sont situées immédiatement en aval de la chambre de combustion (105).

8. Moteur à turbine à gaz selon les revendications 6 ou 7, dans lequel une interface (117) entre l'ensemble d'aubes (110) et la chambre de combustion (105) comporte un passage de trajet de gaz entre une cavité (106) de la chambre de combustion et le bord d'attaque (115) des aubes (111).
